# EUROPEAN PATENT APPLICATION

(11) **EP 3 121 414 A1**
(43) Date of publication of application: **25.01.2017**
(21) Application number: 16180453.9
(22) Date of filing: 20.07.2016
(51) Int. Cl.: F02C 7/05

(54) **AIRCRAFT ENGINE COMPRISING AN INTAKE PIPE PROVIDED WITH AN OPENABLE AIR FILTER**

(30) Priority: 20.07.2015 IT UB20152298
(71) Applicant: BMC S.R.L., 40059 Medicina (IT)
(72) Inventor: BERGAMI, Gaetano, 40059 MEDICINA (IT)
(74) Representative: Maccagnan, Matteo

(57) **Abstract**

An engine (2) of an aircraft (1) having: a tubular housing (3); and at least one air filter (9), which is arranged in the tubular housing (3) close to an air intake opening (4) and is pneumatically connected to an intake mouth of an intake pipe (10); the air filter (9) has at least one movable filtering portion (14, 16), which is mounted so as to move between a closed position, in which the movable filtering portion (14, 16) gives to the air filter (9) a closed shape that completely surrounds the intake mouth of the intake pipe (10), and an open position, in which the movable filtering portion (14, 16) sets free a passageway without filtering material towards the intake mouth of the intake pipe (10); and is provided with an actuator (17), which moves the movable filtering portion (14, 16) of the air filter (9) between the operating position and the rest position.

## Description

### TECHNICAL FIELD

The invention relates to an engine of an aircraft, namely a machine built by mankind, which can stand and move in the air enabling the transportation of people or objects in the Earth's atmosphere, and to a relative air filter.

The invention finds advantageous application in a helicopter, to which explicit reference will be made in the description below without because of this loosing in generality.

### PRIOR ART

A modern helicopter is generally provided with at least one turbine engine, which operates a complex of blades, which allow the helicopter to lift and lower itself in a vertical direction, stand still while flying, move to the side, forward and backward. The turbine engine has, at the front, an air intake, through which the turbine engine sucks in the external air needed to operate (namely, the external air containing the oxygen needed for the combustion).

Generally speaking, the air intake can comprise a metal grid with relatively large meshes (in the range of one or two centimetres), which fulfils the function of preventing birds from flying into the air intake. More rarely, between the air intake and the turbine engine there is arranged an air filter having the function of filtering the air taken in, so as to hold back small-sized impurities (dust or the like), which, in the long term, can cause an early wear of the turbine engine. The use of the air filter is generally avoided, as the air filter causes load losses, which have a significant negative impact on the performances of the turbine engine, and has proven to be useful only close the ground; as a matter of fact, impurities tend to move downwards due to gravity and, therefore, they can be present in the air only in proximity to the ground, whereas at certain heights (i.e. beyond 50-70 metres from the ground) the air is completely free from impurities. As a consequence, the air filter is mounted only when the helicopter must operate (especially take off or land) in areas with a lot of dust, for example in desert areas.

However, the absence of the filter has proven to generally determine higher maintenance costs for the engine, due to the greater wear provoked by the presence of foreign bodies in the combustion chamber during take-off and landing (namely when the helicopter is close to the ground). As a matter of fact, even when the helicopter takes off and lands in heliports (with asphalt surfaces or the like), air currents generated by the rotation of the blades inevitably lift and spread around impurities (basically dust and small debris), which are always present in the external environment.

Patent application US2011001003A1 describes an engine of an aircraft having a tubular housing and at least one air filter with a cylindrical shape, which is arranged in the tubular housing close to an air intake opening and is pneumatically connected to an intake mouth of an intake pipe; the air filter has a movable filtering portion, which is part of a cylindrical lateral wall of the air filter and is mounted so as to move between a closed position, in which the movable filtering portion gives to the air filter a closed shape that completely surrounds the intake mouth of the intake pipe, and an open position, in which the movable filtering portion sets free a passageway without filtering material towards the intake mouth of the intake pipe. In particular, the movable filtering portion moves between the closed position and the open position by means of a rotation around a rotation axis, which makes up the longitudinal symmetry axis of the air filter.

However, the aircraft described in patent application US2011001003A1 is affected by some drawbacks, as the movement of the filtering portion requires a complicated mechanism, which is large and heavy.

### DESCRIPTION OF THE INVENTION

The object of the invention is to provide an aircraft engine and a relative air filter, which allow the aircraft to safely operate even in areas with a lot of dust, without causing, at the same time, a reduction of the performances.

According to the invention, there are provided an aircraft engine and a relative air filter according to the appended claims.

### BRIEF DESCRIPTION OF THE DRAWINGS

The invention will now be described with reference to the accompanying drawings, which show a non-limiting embodiment thereof, wherein:
- figures 1, 2 and 3 are schematic views, namely a side, a front and a top view, respectively, of a helicopter provided with a pair of twin turbine engines;
- figure 4 is a schematic view, with a longitudinal section, of part of a turbine engine of the helicopter of figure 1, said turbine engine not being manufactured according to the invention and comprising an intake pipe provided with an air filter;
- figures 5, 6 and 7 are three schematic views, with a cross section, of the air filter of figure 4 in a closed configuration, in an intermediate configuration and in an open configuration, respectively;
- figure 8 is a schematic view, with a longitudinal section, of a turbine engine of the helicopter of figure 1, said turbine engine being manufactured according to the invention and comprising an intake pipe provided with an air filter;
- figures 9 and 10 are two schematic views, with a cross section, of the air filter of figure 8 in a closed configuration and in an open configuration, respectively;
- figures 11 and 12 are two schematic views, with a cross section, of a variant of the air filter of figure 8 in a closed configuration and in an open configuration, respectively; and
- figures 13 and 14 are two schematic views, with a cross section, of a further variant of the air filter of figure 8 in a closed configuration and in an open configuration, respectively.

### PREFERRED EMBODIMENTS OF THE INVENTION

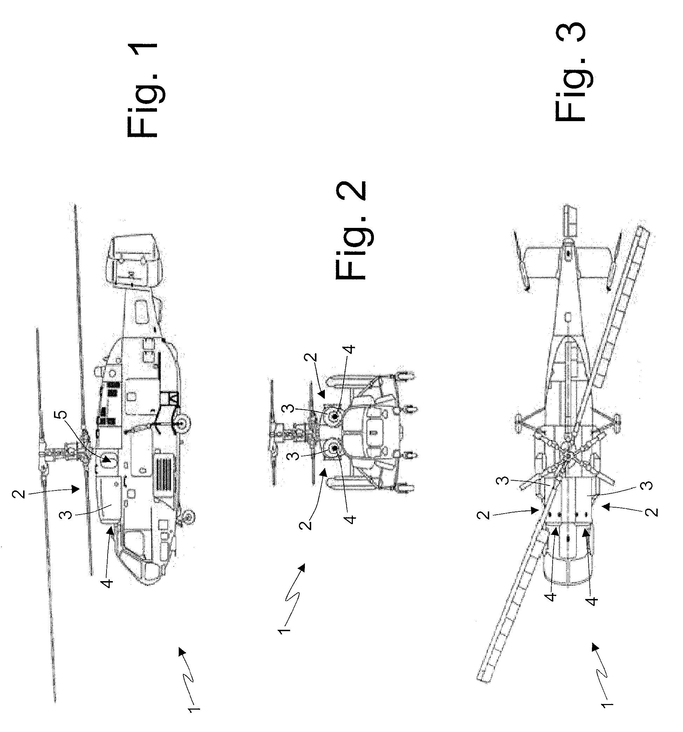

In figures 1, 2 and 3, number 1 indicates, as a whole, a helicopter comprising two twin turbine engines 2, which operate a complex of blades, which allow the helicopter to lift and lower itself in a vertical direction, stand still while flying, move to the side, forward and backward.

Each turbine engine 2 comprises a tubular housing 3 having, at the front, an air intake opening 4 (through which the turbine engine 2 takes in the external air needed to operate, i.e. the external air containing the oxygen needed for the combustion) and, at the back, an air outlet opening 5 (through which the turbine engine 2 expels the exhaust gases produced by the combustion). In the area of the intake opening 4 there can be arranged a metal grid with relatively large meshes (in the range of one or two centimetres), which fulfils the function of preventing birds from flying into the air intake.

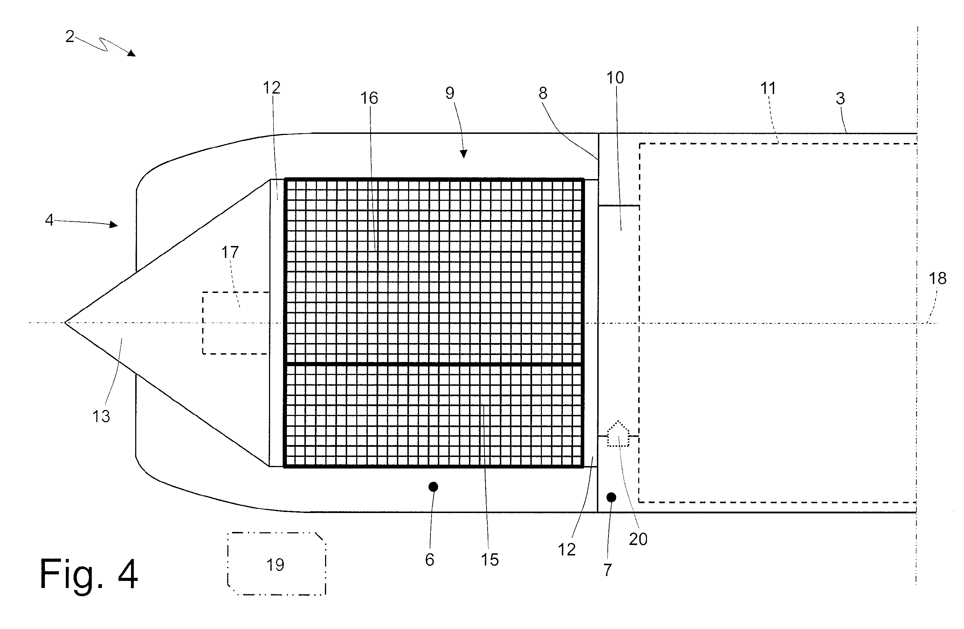

According to figure 4, the tubular housing 3 of each turbine engine 2 has a front intake chamber 6 and a rear propulsion chamber 7, which are divided from one another by a separation wall 8 with an annular shape. The intake chamber 6 houses an air filter 9, which has a cylindrical shape where the filtering material is arranged in the area of the lateral wall. A front base wall of the air filter 9 facing the intake opening 4 is closed, whereas a rear base wall of the air filter 9 facing the propulsion chamber 7 (and preferably arranged close to the separation wall 8) is centrally perforated by an output hole, where the intake pipe 10 is fitted, which ends in a turbine 11 of the turbine engine 2; the turbine 11 of the turbine engine 2 is arranged in the propulsion chamber 7 and generates torque by means of fuel combustion.

The air filter 9 comprises a support frame 12 with a cylindrical shape (made of aluminium, a plastic material or a composite material), which supports different panels of filtering material (for example made of fabric or nonwoven fabric of cotton or other fibres, enclosed between two layers of a thin metal net, which give shape and resistance to the filtering material).

In front of the air filter 9 there is arranged a deflecting element 13 with a conical shape, which rests against a front base wall of the air filter 9 and closes the front base wall itself (i.e. the front base wall of the air filter 9 can have its own closing device resting against the deflecting element 13, or the front base wall of the air filter 9 can be at least partially open and be closed by the deflecting element 13). In the embodiment shown in figure 4, a part (namely, the tip) of the deflecting element 13 projects out of the intake opening 4 of the tubular housing 3; alternatively, the deflecting element 13 can be entirely arranged inside the tubular housing 3, so that it does not project out of the intake opening 4 of the tubular housing 3.

The deflecting element 13 has a conical shape and, as a consequence, as it gets closer to the air filter 9, the deflecting element 13 progressively increases the size (area) of its cross section; therefore, as it gets closer to the air filter 9, the deflecting element 13 progressively reduces the air passageway size (area) (namely, the annular free space delimited, on the inside, by the outer surface of the deflecting element 13 and, on the outside, by the inner surface of the tubular housing 3, i.e. the space into which the air flows, which enters through the intake opening 4 of the tubular housing 3). The progressive reduction of the air passageway size (area) close to the air filter 9 determines an increase in the speed of the air (as the air flow rate necessarily is constant) with a consequent reduction of the pressure of the air (the so-called Venturi effect). In other words, the presence of the deflecting element 13 with a conical shape leads to an increase in the speed of the air taken in close to the air filter 9; this increase in the air speed is particularly positive, as it allows the air taken in to enter the air filter 9 (i.e. to flow through the filtering material of the air filter 9) in a more efficient manner, thus determining a significant increase in the flow rate of the air taken in, which flows through the air filter 9 towards the combustion chamber 11.

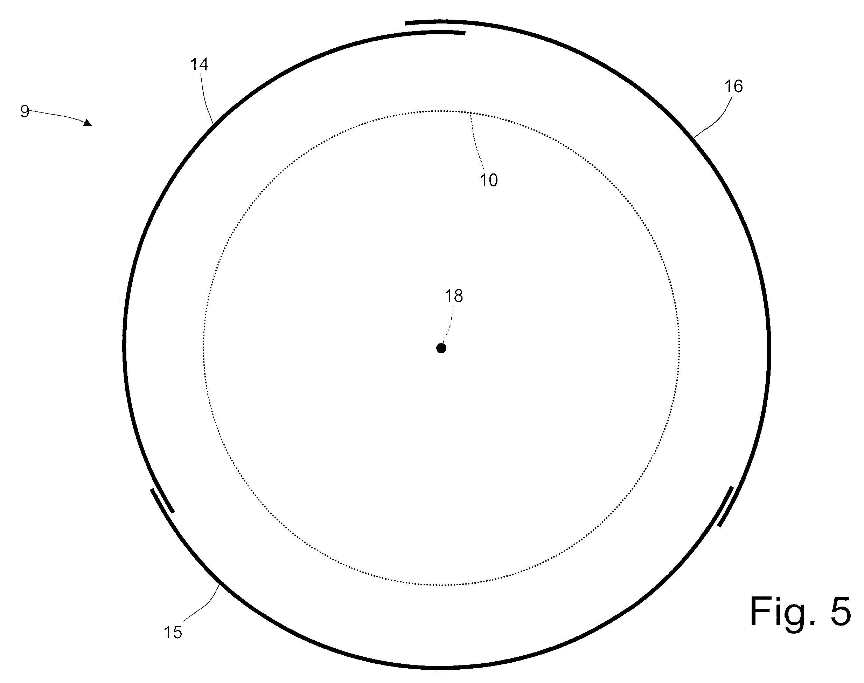

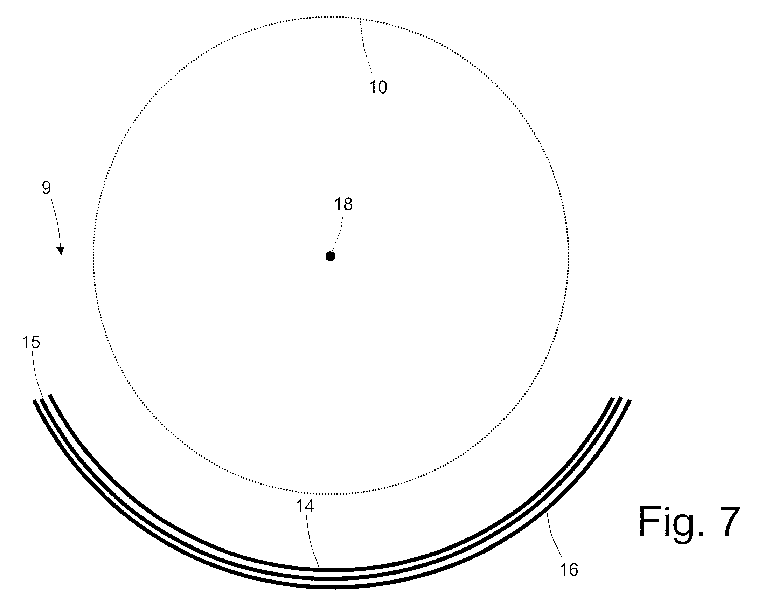

According to figures 5, 6 and 7, the air filter 9 comprises three filtering portions 14, 15 and 16, each of which has the shape of a circular section having an angular extension of a little bit more than 120° and has filtering abilities, namely consists of a peripheral frame supporting one or more panels of filtering material. The three filtering portion 14, 15 and 16 have different diameters and are arranged in the area of circumferences that are concentric to one another and staggered (i.e. having different diameters); in this way, the filtering portions 14, 15 and 16 are not circumferentially aligned with one another, but they are circumferentially staggered, so as to be able to be arranged on top of one another (as you an see in figure 7). In particular, the filtering portion 14 has the smallest diameter and is arranged on the inside relative to the other two filtering portions 15 and 16, the filtering portion 15 has an intermediate diameter and is arranged between the other two filtering portions 14 and 16, and the filtering portion 16 has the greatest diameter and is arranged on the outside relative to the other two filtering portions 14 and 15.

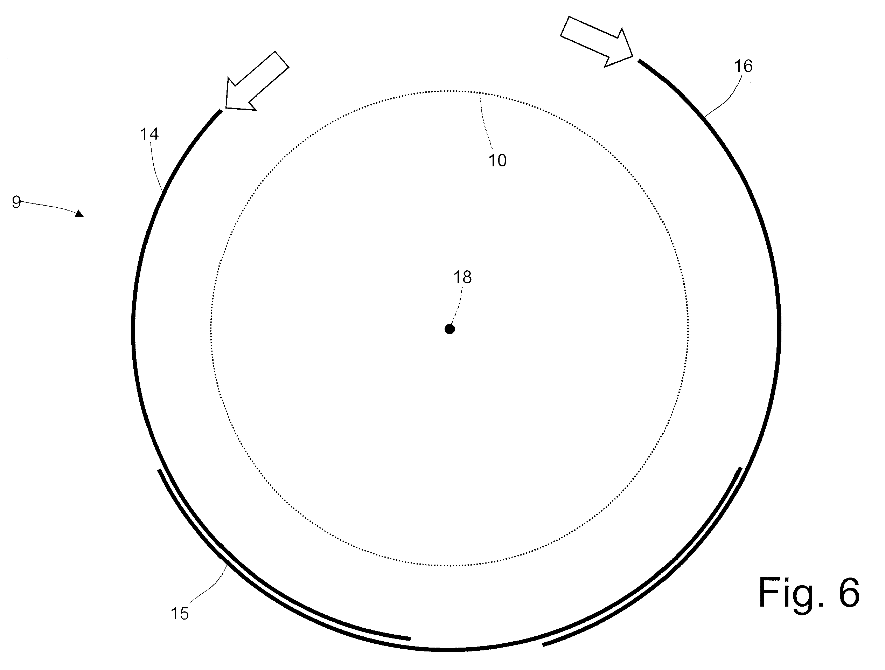

The filtering portion 15 is mounted in a fixed position on the support frame 12 of the air filter 9 (i.e. it always remains in the same position, without ever making any movements), whereas the other two filtering portions 14 and 16 are movable on the support frame 12 of the air filter 9 (thanks to the thrust of an electric motor 17) around a central rotation axis 18 (which makes up the longitudinal symmetry axis of the air filter 9) between a closed position (or operating position, shown in figure 5), in which the three filtering portions 14, 15 and 16 are arranged one after the other with only one small area of mutual overlapping, so as to form a closed shape enclosing, on the inside, the intake mouth of the intake pipe 10, and an open position (or rest position, shown in figure 7), in which the three filtering portions 14, 15 and 16 overlap one another, so as to leave free access to the intake mouth of the intake pipe 10. Figure 6 shows an intermediate position (namely halfway between the open position and the closed position) assumed during the movement of the two filtering portions 14 and 16 from the closed position (or operating position, shown in figure 5) to the open position (or rest position, shown in figure 7).

Generally speaking, the electric motor 17 can mechanically be connected to the air filter 9, but it is not an integral (indivisible) part of the air filter 9 itself; i.e. the air filter 9 can be replaced without having to also replace the electric motor 17.

Preferably, the edges of the three filtering portions 14, 15 and 16 are provided with elastic sealing gaskets, which ensure an adequate seal in the overlapping areas of the three filtering portions 14, 15 and 16, when the three filtering portions 14, 15 and 16 are in the closed position (or operating position, shown in figure 5)

In other words, when the air filter 9 is arranged in the closed position (or operating position, shown in figure 5), the air taken in necessarily flows through the air filter 9; therefore, possible impurities present in the air are held back by the air filter 9, but, on the other hand, the passage through the air filter 9 determines, in the air taken in, a loss of load, which jeopardizes the performances of the turbine engine 2. When the air filter 9 is arranged in the open position (or rest position, shown in figure 7), instead, the air taken in does not flow through the air filter 9 and, therefore, possible impurities present in the air are not held back by the air filter 9; hence, there is no loss of load in the air taken in, but, on the other hand, possible impurities present in the air are not held back by the air filter 9.

According to figure 4, there is provided an electronic control unit 19, which controls the operation of the air filter 9 and, among other things, controls the electric motor 17 so as to have it move the air filter 9 between the closed position (or operating position, shown in figure 5) and the open position (or rest position, shown in figure 7). In particular, when the helicopter 1 is close to the ground (during take-off or landing or when it stops at a low altitude), the air taken in can (likely) contain impurities and, therefore, the air filter 9 is moved to and kept in the closed position (or operating position, shown in figure 5) by the electronic control unit 19, so as to filter the air taken in; on the other hand, when the helicopter 1 flies high (i.e. far from the ground, for example at an altitude of some dozens of metres), the air taken in very likely contains impurities and, therefore, the air filter 9 is moved to and kept in the open position (or rest position, shown in figure 7) by the electronic control unit 19, so as to avoid (uselessly) jeopardizing the performances of the turbine engine 2.

Furthermore, the electronic control unit 19 is connected to a pressure sensor 20, which is arranged downstream of the air filter 9 or inside the air filter 9 and measures the pressure of the air taken in after it has flown through the air filter 9; when the pressure of the air take in, measured by the pressure sensor 20, is below a threshold value, the air filter 9 is moved to and kept in the open position (or rest position, shown in figure 7) by the electronic control unit 19, regardless of the proximity of the helicopter 1 to the ground. In other words, the pressure of the air taken in, measured by the pressure sensor 20, indicates the clogging of the air filter 9, since the more the air filter 9 is clogged, the lower the pressure of the air taken in, measured by the pressure sensor 20, is; therefore, when the air filter 9 is too clogged, namely when the pressure of the air taken in, measured by the pressure sensor 20, is below a threshold value, the air filter 9 is moved to and kept in the open position (or rest position, shown in figure 7) by the electronic control unit 19, so as to avoid excessively jeopardizing the performances of the turbine engine 2.

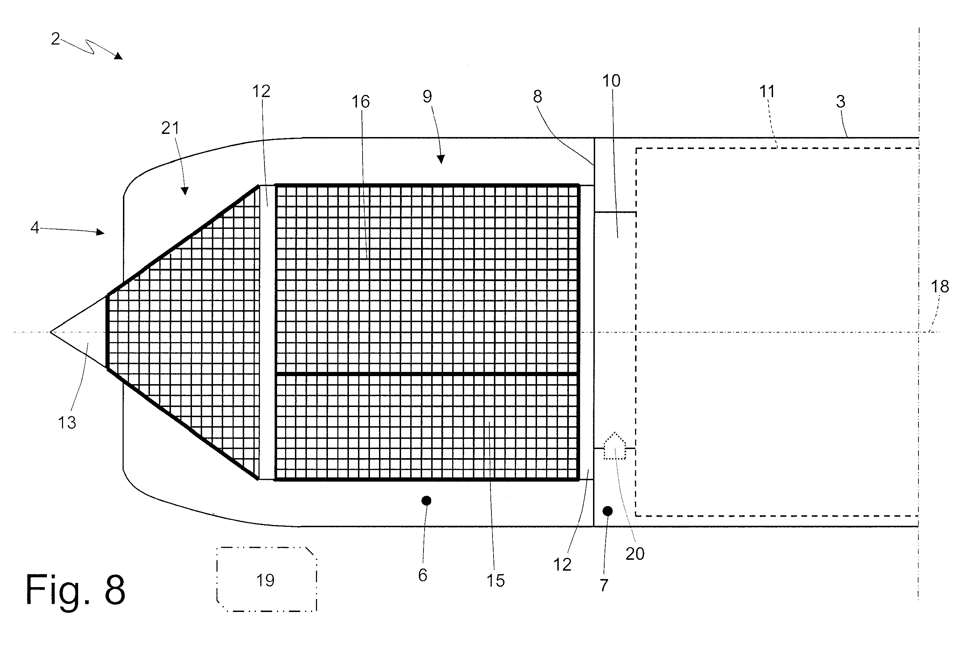

According to the variant shown in figure 8, besides the air filter 9 with a cylindrical shape there is also provided a further additional air filter 21 with the shape of a truncated cone, which is arranged between the deflecting element 13 (having a smaller size) and the air filter 9 and internally communicates with the air filter 9 itself; i.e. the further additional air filter 21 is arranged in front of the air filter 9 and is in pneumatic communication with the air filter 9 itself. In other words, the filtered air flowing into the intake pipe 10 can indifferently flow through the air filter 9 or through the air filter 21. Unlike the air filter 9, the air filter 21 is not capable of changing its configuration by opening up and closing; in other words, the air filter 21 is always closed and is substantially bypassed when the air filter 9 opens up, namely when the air filter 9 moves to the open position (or rest position, shown in figure 7).

In the embodiment shown in figures 5, 6 and 7, the air filter 9 comprises three filtering portions 14, 15 and 16, each of which is shaped like a circular section and has an angular extension of a little bit more than 120° Alternatively, the air filter 9 can comprise a different number of filter portions shaped like a circular sector, for example only two filtering portions shaped like a circular section (each having an angular extension of a little bit more than 180°) or four filtering portions shaped like a circular section (each having an angular extension of a little bit more than 90°).

In the embodiment shown in figures 5, 6 and 7, the air filter 9 comprises two movable filtering portions 14 and 16, each mounted so as to move between a closed position, in which the movable filtering portion 14 or 16 gives to the air filter 9 a closed shape that completely surrounds the intake mouth of the intake pipe 10, and an open position, in which the movable filtering portion 14 or 16 sets free a passageway without filtering material towards the intake mouth of the intake pipe 10; the movable filtering portions 14 and 16 move between the closed position and the open position by means of a rotation around the rotation axis 18, which makes up the longitudinal symmetry axis of the air filter 9.

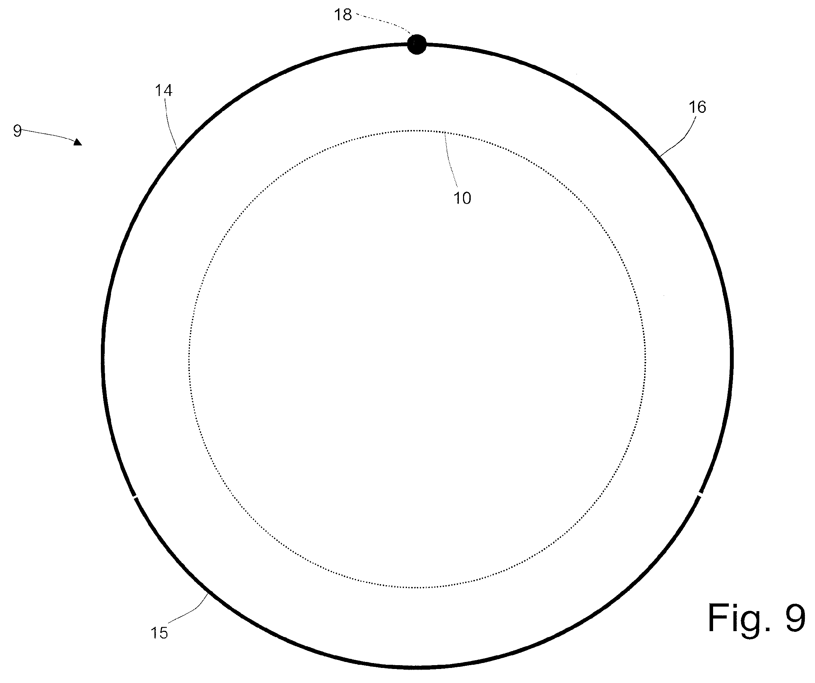

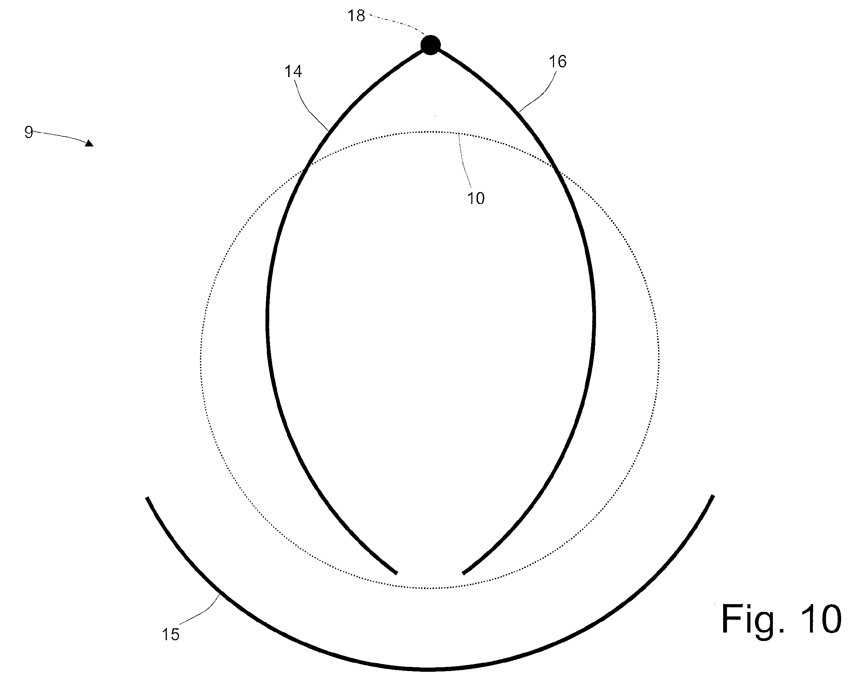

According to the embodiment shown in figures 9 and 10 (manufactured in accordance with the invention), the rotation axis 18 of the movable filtering portions 14 and 16 is not central any longer (i.e. coaxial to the longitudinal symmetry axis of the air filter 9), but it is located in the area of the lateral wall of the air filter 9 (always with a longitudinal orientation, namely parallel to the longitudinal symmetry axis of the air filter 9). The embodiment shown in figures 9 and 10 is mechanically easier to be manufactured, but, on the other hand, in the open position (shown in figure 10) the movable filtering portions 14 and 16 of the air filter 9 partially overlap the intake mouth of the intake pipe 10.

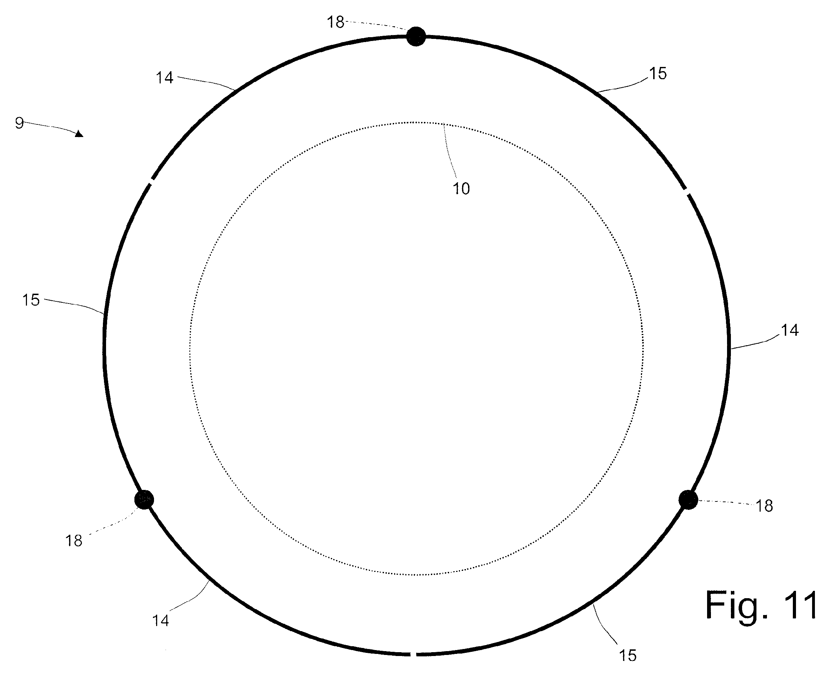

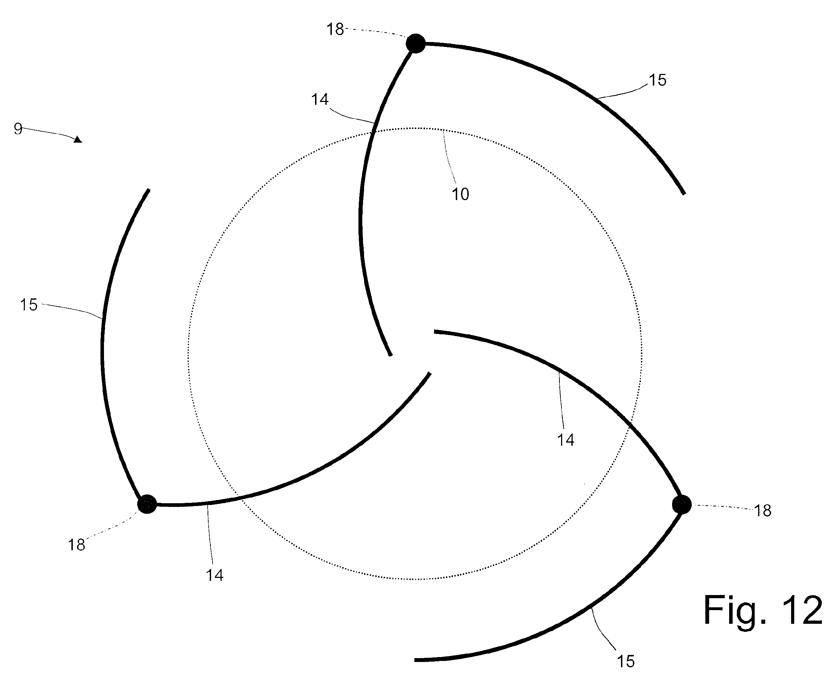

According to the alternative (and perfectly equivalent) embodiment shown in figures 11 and 12, the air filter 9 comprises three fixed filtering portions 15 and three movable filtering portions 14, which are hinged so as to rotate around three respective rotation axes 18, each of which is oriented in a longitudinal manner (i.e. parallel to the longitudinal symmetry axis of the air filter 9) and is arranged in the area of the lateral wall of the air filter 9.

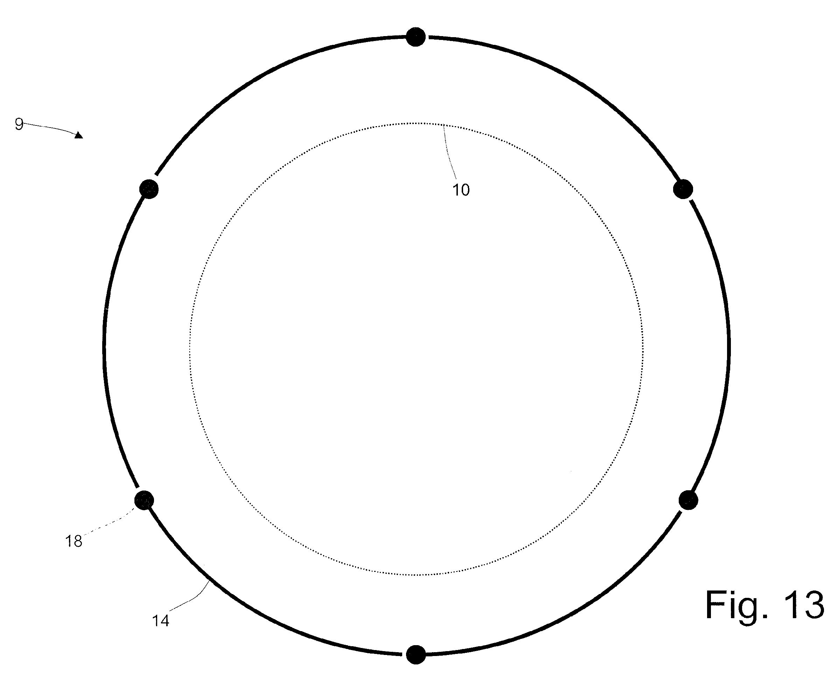

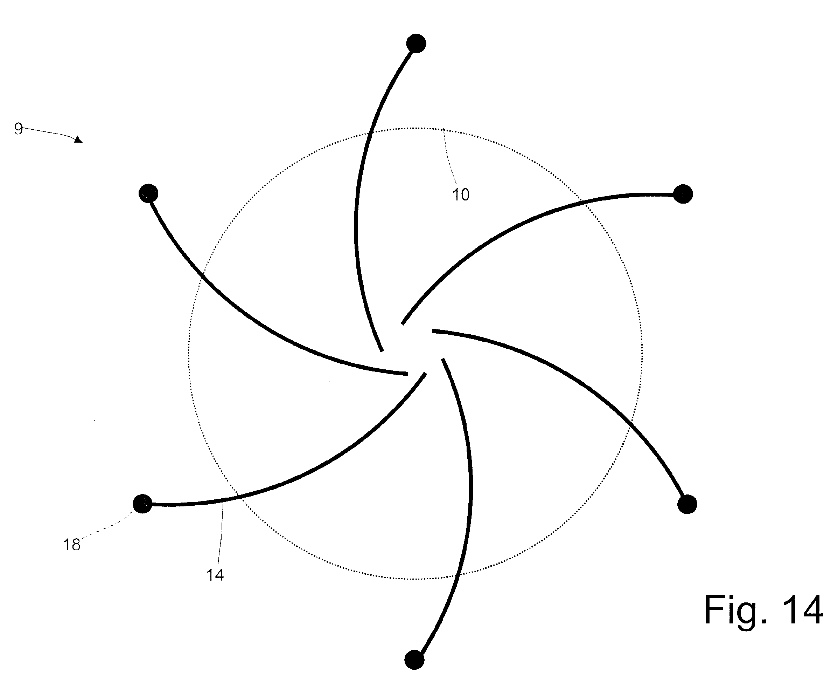

According to the alternative (and perfectly equivalent) embodiment shown in figures 13 and 14, the air filter 9 comprises no fixed filtering portions and six movable filtering portions 14, which are hinged so as to rotate around six respective rotation axes 18, each of which is oriented in a longitudinal manner (i.e. parallel to the longitudinal symmetry axis of the air filter 9) and is arranged in the area of the lateral wall of the air filter 9.

As already mentioned above, the number of movable filtering portions 14 and/or of fixed filtering portions 15 can freely be changed, though always applying the principle of having at least one movable filtering portion 14, which is mounted so as to move between the closed position, in which the movable filtering portion 14 gives to the air filter 9 a closed shape that completely surrounds the intake mouth of the intake pipe 10, and the open position, in which the movable filtering portion 14 sets free a passageway without filtering material towards the intake mouth of the intake pipe 10.

According to an alternative embodiment, which is not shown herein but is perfectly equivalent, the rotation axis 18 of said at least one movable filtering portion 14 of the air filter 9 is oriented crosswise (namely, it is perpendicular or transverse to the longitudinal symmetry axis of the air filter 9).

In the embodiment shown in the accompanying drawings, the air filter 9 has a cylindrical shape. According to an alternative embodiment, which is not shown herein but is perfectly equivalent, the air filter 9 can have a conical shape, the shape of a truncated cone or of a parallelepiped.

The embodiment shown by mere way of example in the accompanying drawings relates to a helicopter 1, but the invention can find advantageous application in any type of aircraft, hence also an airplane.

The engine 2 described above has numerous advantages.

First of all, the engine 2 described above allows the aircraft 1 to safely operate in areas with a lot of dust (hence, in areas where the air close to the ground is rich in impurities raised both by natural wind and by air currents generated by the movement of the aircraft 1) thanks to the presence of the air filter 9, which, when needed, is moved to closed position (or operating position, shown in figure 5), so as to preventively filter the air taken in by the engine 2.

Furthermore, the engine 2 described above can operate, almost for the entire flight, without having its performances jeopardized, because, when the aircraft 1 flies high (i.e. relatively far from the ground), the air filter 9 is moved to the open position (or rest position, shown in figure 7).

Finally, the engine 2 described above is easy and cheap to be manufactured, as the movements of the air filter 9 can be obtained in a simple manner and with components that are available in the market.

## Claims

1. An engine (2) of an aircraft (1); the engine (2) comprises:
a tubular housing (3) having an air intake opening (4), through which the engine (2) takes in the external air needed to operate; and
at least one air filter (9) with a cylindrical shape, which is arranged in the tubular housing (3), is pneumatically connected to an intake mouth of an intake pipe (10), and comprises at least one movable filtering portion (14, 16), which is part of a cylindrical lateral wall of the air filter (9) and is mounted so as to move between a closed position, in which the movable filtering portion (14, 16) gives to the air filter (9) a closed shape that completely surrounds the intake mouth of the intake pipe (10), and an open position, in which the movable filtering portion (14, 16) sets free a passageway without filtering material towards the intake mouth of the intake pipe (10); and
an actuator (17), which moves the movable filtering portion (14, 16) of the air filter (9) between the operating position and the rest position;
the engine (2) is **characterized in that** the movable filtering portion (14, 16) moves between the closed position and the open position by means of a rotation around a rotation axis (18), which is parallel to the longitudinal symmetry axis of the air filter (9) and is arranged in correspondence to the lateral wall of the air filter (9).

2. An engine (2) according to claim 1, wherein the rotation axis (18) is arranged in the area of an edge of the movable filtering portion (14, 16).

3. An engine (2) according to claim 1 or 2, wherein the air filter (9) comprises one fixed filtering portion (15) and two movable filtering portions (14, 16) having a same common rotation axis (18).

4. An engine (2) according to claim 1 or 2, wherein the air filter (9) comprises three fixed filtering portions (15) and three movable filtering portions (14), which are hinged so as to rotate around three respective rotation axes (18).

5. An engine (2) according to claim 1 or 2, wherein the air filter (9) has no fixed filtering portions and comprises six movable filtering portions (14), which are hinged so as to rotate around six respective rotation axes (18).

6. An engine (2) according to any of the claims from 1 to 5 and comprising a further additional air filter (21) with the shape of a truncated cone, which is arranged in front of the air filter (9) and internally communicates with the air filter (9).

7. An engine (2) according to claim 6, wherein the further additional air filter (21) has no movable filtering portions.

8. An engine (2) according to any of the claims from 1 to 7 and comprising a separation wall (8) with an annular shape, which separates a front intake chamber (6) containing the air filter (9) from a rear propulsion chamber (7); a rear base wall of the air filter (9) facing the separation wall (8) is centrally perforated by an output hole, where the intake pipe (10) is fitted.

9. An engine (2) according to any of the claims from 1 to 8 and comprising a deflecting element (13) with a conical shape, which is arranged in front of the air filter (9).

10. An engine (2) according to claim 9, wherein, as it gets closer to the air filter (9), the deflecting element (13) progressively reduces the air passageway area between an outer surface of the deflecting element (13) and an inner surface of the tubular housing (3).

11. An air filter (9) for an engine (2) of an aircraft (1) ;
wherein the air filter (9) can be mounted in a tubular housing (3) close to an air intake opening (4) and can be pneumatically connected to an intake mouth of an intake pipe (10); and
wherein the air filter (9) has a cylindrical shape and comprises at least one movable filtering portion (14, 16), which is part of a cylindrical lateral wall of the air filter (9) and is mounted so as to move between a closed position, in which the movable filtering portion (14, 16) gives to the air filter (9) a closed shape that completely surrounds the intake mouth of the intake pipe (10), and an open position, in which the movable filtering portion (14, 16) sets free a passageway without filtering material towards the intake mouth of the intake pipe (10);
the air filter (9) is **characterized in that** the movable filtering portion (14, 16) moves between the closed position and the open position by means of a rotation around a rotation axis (18), which is parallel to the longitudinal symmetry axis of the air filter (9) and is arranged in correspondence to the lateral wall of the air filter (9).
